# EUROPÄISCHE PATENTSCHRIFT

(11) **EP 3 812 609 B1**
(45) Veröffentlichungstag und Bekanntmachung des Hinweises auf die Patenterteilung: **27.08.2025**
(21) Anmeldenummer: 20199006.6
(22) Anmeldetag: 29.09.2020
(51) Int. Cl.: F16F 9/02, F16F 9/32, H01Q 1/22

(54) **GASDRUCKFEDER**
GAS COMPRESSION SPRING
AMORTISSEUR À PRESSION DE GAZ

(30) Priorität: 25.10.2019 DE 102019128832
(43) Veröffentlichungstag der Anmeldung: 28.04.2021
(73) Patentinhaber: Steinel Normalien AG, 78056 Villingen-Schwenningen (DE)
(72) Erfinder: Elfers, Heinz, 78056 Villingen-Schwenningen (DE)
(74) Vertreter: Westphal, Mussgnug & Partner Patentanwälte mbB

(56) Entgegenhaltungen:
- DE-A1- 102014 104 479
- DE-A1- 102018 003 262
- DE-U1- 202013 102 485
- US-A1- 2005 093 677
- US-A1- 2017 252 017

## Beschreibung

Die Erfindung betrifft ein System mit einer Gasdruckfeder gemäß dem Oberbegriff des Patentanspruchs 1.

Gasdruckfedern weisen üblicherweise ein zylindrisches Gehäuse mit einer Wandung, einem Bodenteil und einem eine Öffnung aufweisenden Deckelteil sowie einer Längsachse auf, wobei in dem Gehäuse entlang der Längsachse ein Kolben mit einer Außenfläche, einer Stirnseite und einem durch die Öffnung geführten Stellelement verschiebbar angeordnet ist. Zwischen dem Kolben, insbesondere zwischen der Stirnseite des Kolbens, und dem Bodenteil des Gehäuses ist eine Gaskompressionskammer gebildet. Derartige Gasdruckfedern werden insbesondere in Werkzeugen oder Maschinen eingesetzt, um Hubbewegungen durchzuführen.

Ein häufig verwendetes Gas zur Befüllung der Gasdruckfedern ist Stickstoff. Gasdruckfedern sind mit Stickstoff oft bei Drucken zwischen 120 und 220 bar gefüllt. Zur Sicherheitsüberwachung ist es beispielsweise aus der DE 10 2014 104 479 A1 bekannt, Gasdruckfedern mit einem Sensor zur Überwachung von physikalischen Messgrößen innerhalb und/oder an der Gasdruckfeder auszustatten. Um beispielsweise die mit dem Sensor erfassten Daten drahtlos nach außen kommunizieren zu können, ist es weiterhin aus der DE 10 2014 104 479 A1 bekannt, ein Funkmodul vorzusehen, wobei die Antenne in oder an dem Deckelteil oder im oder an das Deckelteil angrenzenden Bereich der Wandung des Gehäuses oder im oder an dem Stellelement des Kolbens angeordnet ist, um zu ermöglichen, dass auch bei in einer Maschine oder einem Werkzeug verbauter Gasdruckfeder die Antenne derart frei liegt, dass ein Senden von Funksignalen möglich ist. Allerdings ist die Übertragung von mit einem in dem Bodenteil angeordneten Sensor ermittelten Daten von dem Bodenteil zur im Bereich des Deckelteils angeordneten Antenne nur mit aufwendigen Konstruktionen möglich.

Als weiterer Stand der Technik werden die DE 10 2018 003 262 A1, die DE 20 2013 102 485 U1, die US 2005 / 093 677 A1 sowie die US 2017/252017 A1 genannt.

Die Aufgabe der Erfindung besteht darin, ein System bereitzustellen, welches eine Kommunikation per Funk von in einer Gasdruckfeder ermittelten Daten auf einfache Art und Weise ermöglicht.

Die Aufgabe wird erfindungsgemäß gelöst durch ein System mit den Merkmalen des Patentanspruchs 1.

Vorteilhafte Ausgestaltungen und Weiterbildungen der Erfindung sind in den abhängigen Ansprüchen angegeben.

Das erfindungsgemäße System umfasst eine Gasdruckfeder mit einem zylindrischen Gehäuse, welches eine Wandung, ein Bodenteil und ein eine Öffnung aufweisendes Deckelteil sowie eine Längsachse aufweist, und mit einem in dem Gehäuse entlang der Längsachse verschiebbaren Kolben mit einer Außenfläche, einer Stirnseite und einem durch die Öffnung geführten Stellelement, wobei zwischen dem Kolben und dem Gehäuse eine Gaskompressionskammer gebildet ist und wobei die Gasdruckfeder wenigstens einen Sensor zur Detektion wenigstens einer physikalischen Größe, welcher in dem Bodenteil angeordnet ist, und ein Funkmodul mit einer Antenne aufweist, wobei das Funkmodul und die Antenne ebenfalls in dem Bodenteil angeordnet sind. Durch die räumliche Nähe zwischen Sensor, Funkmodul und Antenne aufgrund der Anordnung der Komponenten in dem Bodenteil entfällt eine aufwendige Datenübertragung durch die Gaskompressionskammer der Gasdruckfeder oder entlang der Wandung zwischen Bodenteil und Deckelteil der Gasdruckfeder.

Vorzugsweise ist die Antenne möglichst nahe zur Außenwandung, insbesondere zur Seitenwandung, des Bodenteils, vorzugsweise in einem Abstand von weniger als 3 mm, besonders bevorzugt in einem Abstand von weniger als 1,5 mm, beispielsweise in einem Abstand von etwa 1 mm, angeordnet, um das zu sendende Signal möglichst wenig zu beeinträchtigen. Es ist dabei nicht ausgeschlossen, dass die Antenne auch über die Seitenwandung hinaus nach außen ragt.

Vorteilhafterweise ist die Antenne monopolartig, beispielsweise mäanderförmig, in einer Ebene ausgebildet, wobei die Ebene vorzugsweise parallel zur Längsachse der Gasdruckfeder angeordnet ist. Eine derartige Antenne weist eine vorteilhafte Abstrahlcharakteristik auf. Die Ausbildung einer monopolartigen Antenne als mäanderförmige Antenne weist den Vorteil auf, dass die Antenne mechanisch kürzer ausgebildet sein kann.

Vorzugsweise ist die Antenne monopolartig, beispielsweise mäanderförmig, entlang einer Antennenachse ausgebildet ist, wobei die Antennenachse vorzugsweise parallel oder senkrecht zur Längsachse der Gasdruckfeder angeordnet ist. Derartige Antennen können auf einfache Art und Weise hergestellt werden.

Gemäß einer bevorzugten alternativen Ausführungsform ist die Antenne als spulenförmige Antenne mit einer Längsachse ausgebildet, wobei die Längsachse insbesondere radial zur Längsachse der Gasdruckfeder angeordnet ist.

Das Funkmodul kann aktiv wirken und vorzugsweise als Bluetooth-Modul ausgebildet sein. Alternativ kann das Funkmodul auch passiv wirken und vorzugsweise als RFID-Chip mit Sensoranschluss ausgebildet sein.

Die Energieversorgung des Sensors, des Funkmoduls und gegebenenfalls weiterer Komponenten erfolgt vorzugsweise mittels einer Batterie, welche als Einweg-Batterie oder als wieder aufladbare Batterie, d. h. als Akkumulator, ausgebildet sein kann.

Die Antenne kann in einem separaten Durchbruch in der Seitenwandung angeordnet sein.

Vorzugsweise weist das Bodenteil ein Batteriefach auf, welches mit einem Deckel verschlossen ist, wobei die Antenne in oder an dem Deckel angeordnet ist. Eine derartige Ausgestaltung ermöglicht einen kompakten Aufbau.

Gemäß einer vorteilhaften Ausführungsform weist das Bodenteil einen Batteriehalter mit einem Boden und einer Seitenwand auf, wobei vorzugsweise der Boden den Deckel des Batteriefachs bildet. Dies kann die Zahl der erforderlichen Komponenten reduzieren.

Eine vorteilhafte Weiterbildung der Erfindung sieht vor, dass der Deckel in der Seitenwandung des Bodenteils angeordnet ist.

Gemäß einer besonders bevorzugten Ausführungsform der Erfindung steht die Antenne mit einer um das Gehäuse umlaufenden, durch die Außenwandung der Gasdruckfeder und die Innenwandung eines die Gasdruckfeder umgebenden Aufnahmeraums gebildeten Sekundärantenne, welche als Schlitz- oder Spaltantenne ausgebildet ist, in Wirkverbindung.

Dass eine Anordnung von Funkmodul und Antenne im Bodenteil der Gasdruckfeder auch bei einer Einbausituation der Gasdruckfeder in einen Aufnahmeraum einer Maschine oder eines Werkzeugs nicht nachteilig ist, wie bislang angenommen, beruht auf der Erkenntnis, dass bei einer Anordnung der Gasdruckfeder in einem Aufnahmeraum, beispielsweise einer Maschine oder eines Werkzeugs, mit einer Beabstandung oder einem Spalt zwischen der Außenwandug der Gasdruckfeder und der Innenwandung des Aufnahmeraums durch diese Beabstandung eine Sekundärantenne gebildet wird, welche als Schlitz- oder Spaltantenne ausgebildet ist. Dabei sollte der so gebildete Schlitz oder Spalt mindestens eine Dicke von 0,5 mm aufweisen, und vorzugsweise im Bereich von 1 mm bis 10 mm, weiter bevorzugt im Bereich von 1,5 mm bis 6 mm und besonders bevorzugt im Bereich von 3 mm bis 5 mm liegen. Steht die Sekundärantenne mit der Antenne der Gasdruckfeder in Wirkverbindung, oder anders ausgedrückt, kann die Antenne der Gasdruckfeder die Sekundärantenne anregen, wird auch in der Einbausituation der Gasdruckfeder in einen Aufnahmeraum, beispielsweise einer Maschine oder eines Werkzeugs, ein Funksignal vom Bodenteil der Gasdruckfeder, welches am Grund des Aufnahmeraums anliegt, ein Funksignal aus dem Aufnahmeraum heraus gesendet.

Die Ankopplung der Antenne an die Spalt- oder Schlitzantenne kann beispielsweise bei einer monopolartigen Antenne elektrisch oder kapazitiv, bei einer spulenförmigen Antenne magnetisch oder induktiv erfolgen.

Gemäß einer vorteilhaften Weiterbildung der Erfindung ist die Strahlungscharakteristik der Sekundärantenne durch die veränderliche Lage des Kolbens in der Gasdruckfeder veränderlich. Dadurch kann statischen richtungsabhängigen Auslöschungen des Funksignals, welche gegebenenfalls in besonderen Raumsituationen auftreten können, entgegengewirkt werden.

Vorzugsweise weist die Gasdruckfeder eine Auswerteelektronik auf, welche zwischen dem Sensor und dem Funkmodul angeordnet sein kann und vorzugsweise in dem Bodenteil angeordnet ist. Die Auswerteelektronik dient zur Erfassung, Aufbereitung oder Verarbeitung der mit dem Sensor ermittelten Daten oder Messwerte.

Gemäß einer vorteilhaften Ausbildung der Erfindung ist der Sensor in einer in der der Gaskompressionskammer zugewandten Wandung des Bodenteils angeordneten Durchgangsöffnung angeordnet ist. Dies ermöglicht eine direkte Detektion einer physikalischen Größe innerhalb der Gaskompressionskammer mittels des Sensors.

Vorzugsweise weist das Bodenteil ein erstes Bodenteilelement und ein zweites Bodenteilelement auf, wobei das erste Bodenteilelement auf das zweite Bodenteilelement aufgesetzt ist und die beiden Bodenteilelemente einen Hohlraum größtenteils umschließen und insbesondere durch eine Dichtung gegeneinander abgedichtet sind, wobei vorzugsweise das Batteriefach in dem Hohlraum angeordnet ist. Durch eine derartige Ausgestaltung ist ein Einbringen des Sensors und gegebenenfalls weiterer Komponenten wie des Batteriefachs in das Bodenteil auf einfache Art und Weise möglich.

Vorteilhafterweise ist das Deckelteil des Gehäuses einstückig mit der Wandung des Gehäuses verbunden, wodurch Undichtigkeiten vermieden werden können. Zudem können die bei der Hubbewegung des Kolbens auftretenden Kräfte günstig aufgenommen werden.

Gemäß einer vorteilhaften Weiterbildung der Erfindung ist die Gaskompressionskammer zwischen der Stirnseite des Kolbens und dem Bodenteil des Gehäuses gebildet, so dass eine sogenannte Ein-Kammer-Gaskompressionskammer gebildet wird. Alternativ kann die Gasdruckfeder zwei Kammern aufweisen, wobei eine erste Kammer zwischen dem Kolben und dem Deckelteil und eine zweite Kammer zwischen der Stirnseite des Kolbens und dem Bodenteil des Gehäuses gebildet sind, so dass eine sogenannte Zwei-Kammer-Gaskompressionskammer gebildet wird. Bei einer Ein-Kammer-Gaskompressionskammer ist der Kolben gegen die Innenwandung des Gehäuses abgedichtet, während bei einer Zwei-Kammer-Gaskompressionskammer ein Gasfluss von dem Bereich zwischen dem Kolben und dem Deckelteil zu dem Bereich zwischen dem Kolben und dem Bodenteil möglich ist und eine Abdichtung zwischen dem Stellelement und dem Gehäuse in der Öffnung des Deckelteils erfolgt.

Als physikalische Größen können insbesondere der Druck, die Temperatur, die Geschwindigkeit, die Kraft, die Vibration, die Dehnung und/oder der Weg mittels des Sensors detektiert werden.

Das erfindungsgemäße System umfasst die Gasdruckfeder und einen die Wandung der Gasdruckfeder umgebenden Aufnahmeraum mit einer Innenwandung und zeichnet sich dadurch aus, dass zwischen der Außenwandung der Wandung der Gasdruckfeder und der Innenwandung des Aufnahmeraums ein Spalt mit einer Dicke von mindestens 0,5 mm gebildet ist und der Spalt eine Sekundärantenne ausbildet. Vorzugsweise weist der so gebildete Schlitz oder Spalt eine Dicke auf, welche im Bereich von 1 mm bis 10 mm, weiter bevorzugt im Bereich von 1,5 mm bis 6 mm und besonders bevorzugt im Bereich von 3 mm bis 5 mm liegt. Die Strahlungscharakteristik der Sekundärantenne ist vorteilhafterweise durch die veränderliche Lage des Kolbens in der Gasdruckfeder veränderlich.

Ein erfindungsgemäßes Verfahren zur Überwachung eines Zustands einer Gasdruckfeder in einem wie zuvor beschriebenen erfindungsgemäßen System weist die folgenden Schritte auf:
- Ermittlung der Amplitude eines von dem Funkmodul an einem Empfangsort empfangenen Funksignals Abhängigkeit von der Zeit und
- Vergleich der Amplitude mit einem erwarteten zeitlichen Verlauf der Amplitude.

Ist beispielsweise die Strahlungscharakteristik der Sekundärantenne durch die veränderliche Lage des Kolbens in der Gasdruckfeder veränderlich, sollte sich bei korrekter Funktion der Gasdruckfeder in Abhängigkeit von der Zeit eine variierende Amplitude des an einem Empfangsort empfangenen Funksignals ergeben. Liegt die erwartete variierende Amplitude nicht vor, kann auf eine Fehlfunktion der Gasdruckfeder geschlossen werden.

Ein Ausführungsbeispiel der Erfindung wird anhand der nachfolgenden Figuren ausführlich erläutert. Es zeigen:
- Fig. 1: einen Längsschnitt durch ein Ausführungsbeispiel einer erfindungsgemäßen Gasdruckfeder im in einen Aufnahmeraum angeordneten Zustand,
- Fig. 2: eine Ausschnittvergrößerung der Gasdruckfeder gemäß Figur 1,
- Fig. 3: eine Seitenansicht des Bodenteils gemäß Figur 2a,
- Fig. 4: eine perspektivische Ansicht des Bodenteils gemäß Figur 3,
- Fig. 5: eine weitere perspektivische Ansicht des Bodenteils gemäß Figur 3,
- Fig. 6: eine weitere perspektivische Ansicht des Bodenteils gemäß Figur 3,
- Fig. 7: eine teilweise geschnittene perspektivische Ansicht des Bodenteils gemäß Figur 3 und
- Fig. 8: eine weitere perspektivische Ansicht des teilweise geschnittenen Bodenteils gemäß Fig. 7.

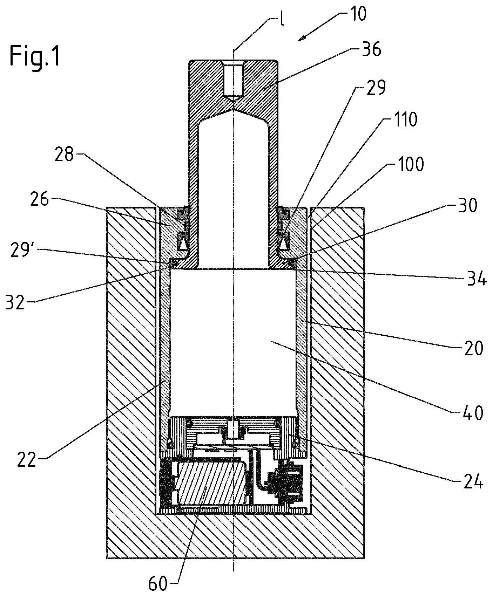

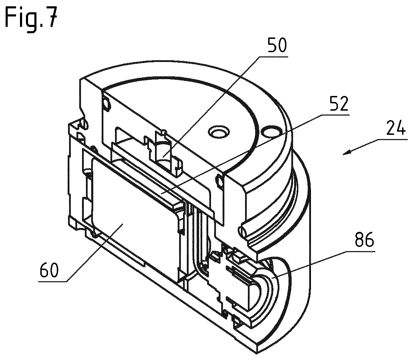

Die Figuren 1 bis 8 zeigen verschiedene Ansichten eines Ausführungsbeispiels einer Gasdruckfeder 10 oder deren Komponenten, wobei gleiche Bezugsziffern gleiche Teile bezeichnen und zur besseren Übersicht nicht sämtliche Bezugsziffern in sämtlichen Figuren angegeben sind.

Fig. 1 zeigt einen Längsschnitt durch die Gasdruckfeder 10, welche ein Gehäuse 20 und einen in dem Gehäuse 20 verschiebbar angeordneten Kolben 30 aufweist. Das Gehäuse 20 ist zylindrisch, insbesondere kreiszylindrisch, ausgebildet und weist eine Wandung 22, ein Bodenteil 24 und ein Deckelteil 26 auf. Das Deckelteil 26 ist insbesondere einstückig mit der Wandung 22 verbunden, während das Bodenteil 24 vorteilhafterweise lösbar an der Wandung 22 angeordnet ist und beispielsweise mittels einer Schraubverbindung mit der Wandung 22 verbindbar ist.

Der Kolben 30 ist zylindrisch ausgebildet mit einer Außenfläche 32 sowie einer Stirnseite 34 und einem Stellelement 36. Das Deckelteil 26 des Gehäuses 20 weist eine Öffnung 28 auf, durch welche das Stellelement 36 aus dem Gehäuse 20 nach außen geführt ist.

Das Gehäuse 20 weist eine Längsachse l auf, entlang welcher der Kolben 30 in dem Gehäuse 20 verschiebbar angeordnet ist.

Zwischen dem Kolben 30 und dem Gehäuse 20 ist eine Gaskompressionskammer 40 gebildet. Die Gaskompressionskammer 40 ist in der Öffnung 28, durch welche das Stellelement 36 aus dem Gehäuse 20 nach außen geführt ist, durch eine Dichtung 29 abgedichtet. An der Außenfläche des Kolbens 30 kann, falls keine Dichtung dort vorgesehen ist, Gas von einem ersten Teil der Gaskompressionskammer 40, welcher zwischen der Stirnseite 34 des Kolbens 30 und dem Bodenteil 24 des Gehäuses 20 angeordnet ist, in einen zweiten Teil der Gaskompressionskammer 40, welcher zwischen dem Kolben 30 und dem Deckelteil 26 gebildet ist, strömen. Auf diese Weise wird eine sogenannte Zwei-Kammer-Gaskompressionskammer 40 gebildet. In dem dargestellten Ausführungsbeispiel ist an der Außenfläche 32 eine zusätzliche Dichtung 29' angeordnet, welche einen Gasfluss wie zuvor beschrieben unterbindet, so dass zwischen der Stirnseite 34 des Kolbens 30 und dem Bodenteil 24 des Gehäuses eine Ein-Kammer-Gaskompressionskammer 40 gebildet ist.

In der Gasdruckfeder 10, insbesondere der Gaskompressionskammer 40, ist ein Gas, beispielsweise Stickstoff, angeordnet, welches bei Einführen des Kolbens 30 in das Gehäuse 20 verdichtet wird, so dass sich ein Druck aufbaut. Dieser erzeugt eine Rückstellkraft auf den Kolben 30. Derartige Gasdruckfedern 10 werden insbesondere in Werkzeugen oder Maschinen in einen Aufnahmeraum 100 wie in Figur 1 dargestellt eingesetzt.

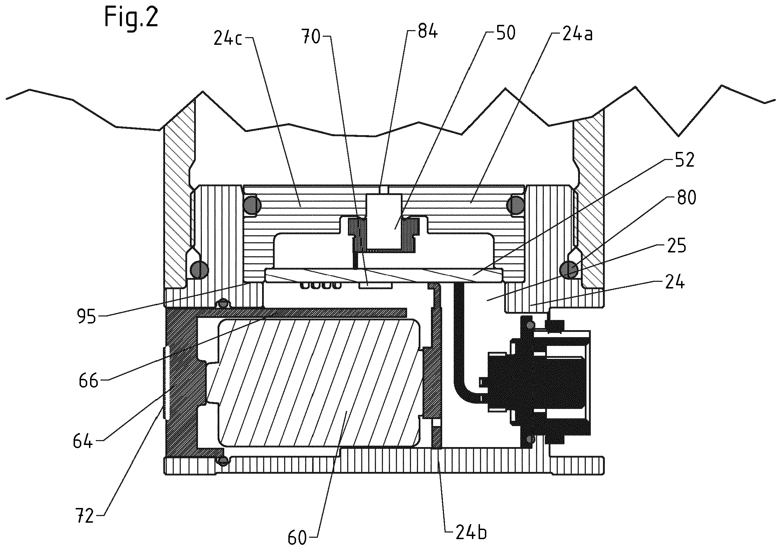

Die Gasdruckfeder 10 weist einen Sensor 50 zur Detektion einer physikalischen Größe auf (vgl. Fig. 2). Beispielsweise kann der Sensor 50 als Drucksensor, Temperatursensor, Kraftsensor oder Wegsensor ausgebildet sein. In einer bevorzugten Ausführungsform kann der Sensor 50 als kombinierter Druck- und Temperatursensor ausgebildet sein. Der Sensor 50 ist beispielsweise in das Gehäuse 20 derart integriert, dass er physikalische Größen, beispielsweise Druck und/oder Temperatur, in der Gaskompressionskammer 40 detektieren kann. Der Sensor 50 kann als Dünnfilm-Sensorelement ausgebildet sein, welches kompakt aufgebaut und störunempfindlich ist. Der Sensor 50 ist insbesondere derart in das Gehäuse 20 integriert, dass die zylindrische Form des Gehäuses 20 erhalten bleibt.

In dem in den Figuren dargestellten Ausführungsbeispiel der Gasdruckfeder 10 ist der Sensor 50 in das Bodenteil 24 integriert. Das Bodenteil 24 weist insbesondere einen Hohlraum 25 auf. Der Sensor 50 ist in einer der Gaskompressionskammer 40 zugewandten Wandung 24c des Bodenteils 24 in einer Durchgangsöffnung angeordnet. Damit hat der Sensor 50 direkten ungehinderten Zugang zu der Gaskompressionskammer 40, um in der Gaskompressionskammer 40 physikalische Größen wie beispielsweise Druck oder Temperatur zu detektieren. Der Sensor 50 ist in der Durchgangsöffnung druckdicht angeordnet, sodass die Gaskompressionskammer 40 in ihrer Dichtigkeit nicht beeinträchtigt wird. Die Anschlusskontakte des Sensors 50 sind in den Hohlraum 25 geführt. Dort kann der Sensor 50 mit einer Auswerteelektronik 52 verbunden sein. Die Auswerteelektronik 52 kann beispielsweise auf einer Platine angeordnet sein.

In dem dargestellten Ausführungsbeispiel wird die Stromversorgung des Sensors 50 und der Auswerteelektronik 52 durch eine Batterie 60, beispielsweise einer Einmalbatterie oder einer wieder aufladbaren Batterie, d. h. einem Akkumulator, sichergestellt. Alternativ oder zusätzlich kann die Stromversorgung auch mittels eines Kabels, induktiv oder mittels Energy Harvesting erfolgen.

In dem Bodenteil 24 kann ein Batteriefach mit einer Öffnung angeordnet sein, welches mit einem Deckel verschlossen ist. Beispielsweise kann, wie in den Figuren dargestellt, ein Batteriehalter mit einem Boden 64 und einer Seitenwand 66 vorgesehen sein, wobei vorzugsweise der Boden 64 den Deckel des Batteriefachs bildet und die Öffnung in dem Bodenteil 24, durch welche die Batterie 60 bedarfsweise gewechselt werden kann, verschließt.

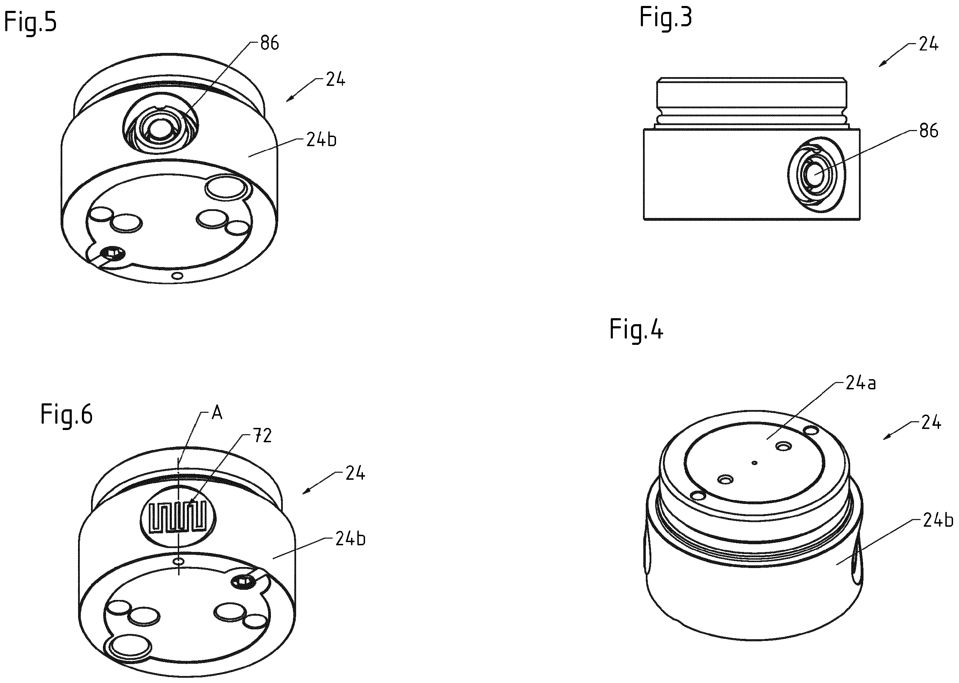

Wie insbesondere in Figuren 3 und 5 erkennbar, kann das Bodenteil 24 eine Steckeranschlussbuchse 86 aufweisen. Die Steckeranschlussbuchse 86 kann als Datenübertragungsschnittstelle und/oder als Stromanschluss dienen.

Das Bodenteil 24 weist vorteilhafterweise ein erstes Bodenteilelement 24a und ein zweites Bodenteilelement 24b auf. Das erste Bodenteilelement 24a bildet eine Art Deckel des zweiten Bodenteilelements 24b, wobei im auf das zweite Bodenteilelement24b auf- oder eingesetzten Zustand des ersten Bodenteilelements 24a ein geschlossenes Bodenteil 24 gebildet wird. Insbesondere wird das erste Bodenteilelement 24a auf eine Stufe 95 des zweiten Bodenteilelements 24b aufgelegt. Zwischen den Anlageflächen, mit welchen das erste Bodenteilelement 24a und das zweite Bodenteilelement 24b aneinander liegen, kann eine Dichtung 80 angeordnet sein, um eine druckdichte Abdichtung zwischen dem ersten Bodenteilelement 24a und dem zweiten Bodenteil 24b zu ermöglichen.

Um das erste Bodenteilelement 24a von dem zweiten Bodenteilelement 24b entfernen zu können, kann beispielsweise das erste Bodenteilelement 24a eine Ausnehmung 84 aufweisen, welche insbesondere durch einen Teil der Durchgangsöffnung in dem ersten Bodenteilelement 24a gebildet ist, in welcher der Sensor 50 angeordnet ist. In die Ausnehmung 84 kann ein Werkzeug derart eingesetzt und in axialer Richtung fixiert werden, dass ein Entfernen des ersten Bodenteilelements 24 von dem zweiten Bodenteilelement 24b möglich ist. Insbesondere kann dazu die Ausnehmung 84 ein Innengewinde aufweisen. Das erste Bodenteilelement 24a kann mit dem zweiten Bodenteilelement 24b über eine Schraubverbindung verbunden sein.

Die Gasdruckfeser 10 weist ein Funkmodul 70 mit einer Antenne 72 auf, welche in dem Bodenteil 24 angeordnet sind. Die Antenne 72 ist dabei elektrisch leitend mit dem Funkmodul 70 verbunden. Das Funkmodul 70 kann auf der Platine angeordnet sein, welche in dem Hohlraum 25 in dem Bodenteil 24 angeordnet ist. Das Funkmodul 70 kann mit der Auswerteelektronik 52 verbunden sein, welche ihrerseits mit dem Sensor 50 verbunden sein kann, so dass die Auswerteelektronik 52 zwischen dem Sensor 50 und dem Funkmodul 70 angeordnet sein kann.

Das Funkmodul 70 kann auf gängigen Übertragungsstandards basieren. Das Funkmodul 70 kann aktiv wirken und vorzugsweise als Bluetooth-Modul ausgebildet sein. Alternativ kann das Funkmodul 70 auch passiv wirken und vorzugsweise als RFID-Chip mit Sensoranschluss ausgebildet sein.

Die Antenne 72 sollte möglichst nahe zur Außenwandung der Gasdruckfeder 10, insbesondere zur Seitenwandung des Bodenteils 24, vorzugsweise in einem Abstand von weniger als 3 mm, besonders bevorzugt in einem Abstand von weniger als 1,5 mm, beispielsweise in einem Abstand von etwa 1 mm, angeordnet sein. Es ist grundsätzlich möglich, die Antenne 72 freiliegend anzuordnen, wobei dies die Gefahr von Beschädigungen erhöht. Es bietet sich daher an, die Antenne 72 in die Seitenwandung des Bodenteils 24, beispielsweise in einem separaten Durchbruch, oder in den Deckel des Batteriefachs, der insbesondere einen Teil der Seitenwandung des Bodenteils 24 bildet, zu integrieren. In der dargestellten Ausführungsform ist die Antenne 72 in den Boden 64 des Batteriehalters, der gleichzeitig den Deckel des Batteriefachs bildet, integriert. Die Antenne 72 kann dazu auf der Außenseite des Bodens 64 angeordnet sein oder beispielsweise in dem Boden 64 beidseitig vergossen sein.

Die Antenne 72 kann monopolartig, insbesondere mäanderförmig, in einer Ebene ausgebildet sein, wobei die Ebene beispielsweise parallel zur Längsachse l der Gasdruckfeder 10 angeordnet ist. Im vorliegenden Ausführungsbeispiel ist die Ebene die Außenfläche des Bodens 64 oder eine parallel zu dieser Außenfläche des Bodens 64 verlaufende Fläche ausgebildet.

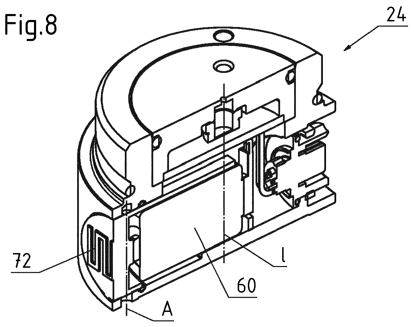

Die Antenne 72 kann monopolartig, insbesondere mäanderförmig, entlang einer Antennenachse A ausgebildet sein, welche im vorliegenden Ausführungsbeispiel parallel zur Längsachse l der Gasdruckfeder 10 angeordnet ist (vgl. Fig. 6 und 8).

Wird die Gasdruckfeder 10 in einer Maschine oder einem Werkzeug angeordnet, wird das Gehäuse 20 der Gasdruckfeder 10 nahezu vollständig in einen zylindrischen Aufnahmeraum 100 der Maschine oder des Werkzeugs eingesetzt. Somit ist die Gasdruckfeder 10 in der Regel derart abgeschirmt, dass ein im Bodenteil 24 angeordnetes Funkmodul keine Signale nach außen senden kann.

Es hat sich jedoch gezeigt, dass in dem Fall, dass die Gasdruckfeder 10 derart in den Aufnahmeraum 100 eingesetzt ist, dass um das Gehäuse 20 der Gasdruckfeder 10 umlaufend ein durch die Außenwandung der Gasdruckfeder 10 und die Innenwandung des die Gasdruckfeder 10 umgebenden Aufnahmeraums 100 gebildeter Spalt angeordnet ist, eine Schlitz- oder Spaltantenne 110 gebildet ist, mit welcher die Antenne 72 derart zusammenwirken kann, dass ein Ausstrahlen des Funksignals vom Bodenteil 24 der Gasdruckfeder 10 aus dem Aufnahmeraum 100 heraus möglich ist. Der Spalt weist eine Dicke von mindestens 0,5 mm, vorzugsweise von 1 mm bis 10 mm, weiter vorzugsweise von 1,5 mm bis 6 mm, beispielsweise von 3 mm bis 5 mm, auf. Steht die so gebildete Schlitz- oder Spaltantenne in Wirkverbindung mit der Antenne 72, kann das Funksignal selbst vom Grund des Aufnahmeraums 100 bzw. vom Bodenteil 24 der Gasdruckfeder aus dem Aufnahmeraum 100 heraus übertragen werden.

Die Strahlungscharakteristik des auf diese Weise entstehenden Funksignals bzw. der Schlitz- oder Spaltantenne ist vorzugsweise durch die veränderliche Lage des Kolbens 30 in dem Gehäuse 20 der Gasdruckfeder 10 veränderlich. Diese Ausbildung kann in einem Verfahren zur Überwachung eines Zustands einer Gasdruckfeder genutzt werden, indem zunächst die Amplitude eines von dem Funkmodul an einem Empfangsort empfangenen Funksignals in Abhängigkeit von der Zeit ermittelt und anschließend die Amplitude und mit einem erwarteten zeitlichen Verlauf der Amplitude verglichen wird.

### Bezugszeichenliste

- 10: Gasdruckfeder
- 20: Gehäuse
- 22: Wandung
- 24: Bodenteil
- 24a: erstes Bodenteilelement
- 24b: zweites Bodenteilelement
- 24c: Wandung
- 25: Hohlraum
- 26: Deckelteil
- 28: Öffnung
- 29: Dichtung
- 29': Dichtung
- 30: Kolben
- 32: Außenfläche
- 34: Stirnseite
- 36: Stellelement
- 40: Gaskompressionskammer
- 50: Sensor
- 52: Auswerteelektronik
- 60: Batterie
- 64: Boden
- 66: Seitenwand
- 70: Funkmodul
- 72: Antenne
- 80: Dichtung
- 84: Ausnehmung
- 86: Steckeranschluss
- 95: Stufe
- l: Längsachse
- 100: Aufnahmeraum
- 110: Schlitz- oder Spaltantenne

## Patentansprüche

1. System umfassend
• eine Gasdruckfeder (10) mit einem zylindrischen Gehäuse (20), welches eine Wandung (22), ein Bodenteil (24) und ein eine Öffnung (28) aufweisendes Deckelteil (26) sowie eine Längsachse (l) aufweist, und mit einem in dem Gehäuse (20) entlang der Längsachse (l) verschiebbaren Kolben (30) mit einer Außenfläche (32), einer Stirnseite und einem durch die Öffnung (28) geführten Stellelement (36), wobei zwischen dem Kolben (30) und dem Gehäuse (20) eine Gaskompressionskammer (40) gebildet ist und wobei die Gasdruckfeder (10) wenigstens einen Sensor (50) zur Detektion einer physikalischen Größe, welcher in dem Bodenteil (24) angeordnet ist, und ein Funkmodul (70) mit einer Antenne (72) aufweist, wobei das Funkmodul (70) und die Antenne (72) in dem Bodenteil (24) angeordnet sind,
**gekennzeichnet durch**
• einen die Wandung der Gasdruckfeder (10) umgebenden Aufnahmeraum (100) mit einer Innenwandung,
wobei
• zwischen der Außenwandung der Wandung der Gasdruckfeder (10) und der Innenwandung des Aufnahmeraums (100) ein Spalt mit einer Dicke von mindestens 0,5 mm gebildet ist und der Spalt eine Sekundärantenne (110) ausbildet.

2. System nach Anspruch 1,
**dadurch gekennzeichnet, dass** die Antenne (72) möglichst nahe zur Außenwandung, insbesondere zur Seitenwandung, des Bodenteils (24), vorzugsweise in einem Abstand von weniger als 3 mm, besonders bevorzugt in einem Abstand von weniger als 1,5 mm, beispielsweise in einem Abstand von etwa 1 mm, angeordnet ist.

3. System nach einem der vorhergehenden Ansprüche,
**dadurch gekennzeichnet, dass** die Antenne (72) monopolartig, vorzugsweise mäanderförmig, in einer Ebene ausgebildet ist, wobei die Ebene vorzugsweise parallel zur Längsachse (l) der Gasdruckfeder (10) angeordnet ist.

4. System nach einem der vorhergehenden Ansprüche,
**dadurch gekennzeichnet, dass** die Antenne (72) monopolartig, vorzugsweise mäanderförmig, entlang einer Antennenachse (A) ausgebildet ist, wobei die Antennenachse (A) vorzugsweise parallel oder senkrecht zur Längsachse (l) der Gasdruckfeder (10) angeordnet ist.

5. System nach Anspruch 1 oder 2,
**dadurch gekennzeichnet, dass** die Antenne (72) als spulenförmige Antenne mit einer Längsachse ausgebildet ist, wobei die Längsachse insbesondere radial zur Längsachse (l) der Gasdruckfeder (10) angeordnet ist.

6. System nach einem der vorhergehenden Ansprüche,
**dadurch gekennzeichnet, dass** das Bodenteil (24) ein Batteriefach aufweist, welches mit einem Deckel verschlossen ist, wobei die Antenne (72) in oder an dem Deckel angeordnet ist.

7. System nach Anspruch 6,
**dadurch gekennzeichnet, dass** das Bodenteil (24) einen Batteriehalter mit einem Boden (64) und einer Seitenwand (66) aufweist, wobei vorzugsweise der Boden (64) den Deckel des Batteriefachs bildet.

8. System nach Anspruch 6 oder 7,
**dadurch gekennzeichnet, dass** der Deckel in der Seitenwandung des Bodenteils (24) angeordnet ist.

9. System nach einem der vorhergehenden Ansprüche,
**dadurch gekennzeichnet, dass** die Antenne (72) mit der Sekundärantenne (110) , welche als Schlitz- oder Spaltantenne ausgebildet ist, in Wirkverbindung steht.

10. System nach Anspruch 9,
**dadurch gekennzeichnet, dass** die Strahlungscharakteristik der Sekundärantenne (110) durch die veränderliche Lage des Kolbens (30) in der Gasdruckfeder (10) veränderlich ist.

11. System nach einem der vorhergehenden Ansprüche,
**dadurch gekennzeichnet, dass** die Gasdruckfeder (10) eine Auswerteelektronik (52) aufweist, welche zwischen dem Sensor (50) und dem Funkmodul (70) angeordnet sein kann und vorzugsweise in dem Bodenteil (24) angeordnet ist.

12. System nach einem der vorhergehenden Ansprüche,
**dadurch gekennzeichnet, dass** der Sensor (50) in einer in der der Gaskompressionskammer (40) zugewandten Wandung (24c) des Bodenteils (24) angeordneten Durchgangsöffnung angeordnet ist.

13. System nach einem der vorhergehenden Ansprüche,
**dadurch gekennzeichnet, dass** das Bodenteil (24) ein erstes Bodenteilelement (24a) und ein zweites Bodenteilelement (24b) aufweist, wobei das erste Bodenteilelement 824a) auf das zweite Bodenteilelement (24b) aufgesetzt ist und die beiden Bodenteilelemente (24a, 24b) einen Hohlraum (25) größtenteils umschließen und insbesondere durch eine Dichtung (80) gegeneinander abgedichtet sind.

14. System nach einem der vorhergehenden Ansprüche,
**dadurch gekennzeichnet, dass** das Deckelteil (26) des Gehäuses (20) einstückig mit der Wandung (22) des Gehäuses (20) verbunden ist.

15. System nach einem der vorhergehenden Ansprüche,
**dadurch gekennzeichnet, dass** der Spalt eine Dicke von 1 mm bis 10 mm, vorzugsweise von 1,5 mm bis 6 mm, beispielsweise von 3 mm bis 5 mm, aufweist.

16. System nach einem der vorhergehenden Ansprüche,
**dadurch gekennzeichnet, dass** die Strahlungscharakteristik der Sekundärantenne (110) durch die veränderliche Lage des Kolbens (30) in der Gasdruckfeder (10) veränderlich ist.

17. Verfahren zur Überwachung eines Zustands einer Gasdruck-
feder (10) in einem System nach einem der vorhergehenden Ansprüche mit den Schritten:
- Ermittlung der Amplitude eines von dem Funkmodul (70) an einem Empfangsort empfangenen Funksignals in Abhängigkeit von der Zeit und
- Vergleich der Amplitude mit einem erwarteten zeitlichen Verlauf der Amplitude.

## Claims

1. System, comprising
• a gas compression spring (10) having a cylindrical housing (20) which has a wall (22), a base part (24), and a cover part (26) comprising an opening (28), as well as a longitudinal axis (l), and having a piston (30) which is displaceable in the housing (20) along the longitudinal axis (l) and has an outer surface (32), an end face, and an actuator (36) that is guided through the opening (28), wherein a gas compression chamber (40) is formed between the piston (30) and the housing (20) and wherein the gas compression spring (10) has at least one sensor (50) for detecting a physical variable, which sensor is arranged in the base part (24), and a radio module (70) having an antenna (72), wherein the radio module (70) and the antenna (72) are arranged in the base part (24),
**characterised by**
• a receiving space (100) which surrounds the wall of the gas compression spring (10) and has an inner wall,
wherein
• a gap having a thickness of at least 0.5 mm is formed between the outer wall of the wall of the gas compression spring (10) and the inner wall of the receiving space (100), and the gap forms a secondary antenna (110).

2. System according to claim 1,
**characterised in that** the antenna (72) is arranged as close as possible to the outer wall, in particular to the side wall, of the base part (24), preferably at a spacing of less than 3 mm, particularly preferably at a spacing of less than 1.5 mm, for example at a spacing of approximately 1 mm.

3. System according to either of the preceding claims,
**characterised in that** the antenna (72) is configured in a monopole manner, preferably in a meander shape, in one plane, wherein the plane is preferably arranged in parallel with the longitudinal axis (l) of the gas compression spring (10).

4. System according to any of the preceding claims,
**characterised in that** the antenna (72) is configured in a monopole manner, preferably in a meander shape, along an antenna axis (A), wherein the antenna axis (A) is preferably arranged in parallel with or perpendicularly to the longitudinal axis (l) of the gas compression spring (10).

5. System according to either claim 1 or claim 2,
**characterised in that** the antenna (72) is configured as a coil-shaped antenna having a longitudinal axis, wherein the longitudinal axis is in particular arranged radially to the longitudinal axis (l) of the gas compression spring (10).

6. System according to any of the preceding claims,
**characterised in that** the base part (24) comprises a battery compartment which is closed with a cover, wherein the antenna (72) is arranged in or on the cover.

7. System according to claim 6,
**characterised in that** the base part (24) comprises a battery holder having a base (64) and a side wall (66), wherein preferably the base (64) forms the cover of the battery compartment.

8. System according to either claim 6 or claim 7,
**characterised in that** the cover is arranged in the side wall of the base part (24).

9. System according to any of the preceding claims,
**characterised in that** the antenna (72) is operatively connected to the secondary antenna (110) which is configured as a slot antenna.

10. System according to claim 9,
**characterised in that** the radiation characteristic of the secondary antenna (110) can be varied by the variable position of the piston (30) in the gas compression spring (10).

11. System according to any of the preceding claims,
**characterised in that** the gas compression spring (10) comprises evaluation electronics (52) which can be arranged between the sensor (50) and the radio module (70) and is preferably arranged in the base part (24).

12. System according to any of the preceding claims,
**characterised in that** the sensor (50) is arranged in a through-opening arranged in the wall (24c) of the base part (24) that faces the gas compression chamber (40).

13. System according to any of the preceding claims,
**characterised in that** the base part (24) comprises a first base part element (24a) and a second base part element (24b), wherein the first base part element (24a) is placed on the second base part element (24b) and the two base part elements (24a, 24b) largely surround a cavity (25) and in particular are sealed against one another by a seal (80).

14. System according to any of the preceding claims,
**characterised in that** the cover part (26) of the housing (20) is integrally connected to the wall (22) of the housing (20).

15. System according to any of the preceding claims,
**characterised in that** the gap is of a thickness of from 1 mm to 10 mm, preferably from 1.5 mm to 6 mm, for example from 3 mm to 5 mm.

16. System according to any of the preceding claims,
**characterised in that** the radiation characteristic of the secondary antenna (110) can be varied by the variable position of the piston (30) in the gas compression spring (10).

17. Method for monitoring a state of a gas compression spring (10) in a system according to any of the preceding claims, comprising the steps of:
- determining the amplitude of a radio signal, received by the radio module (70) at a receiving point, depending on time, and
- comparing the amplitude with an expected temporal course of the amplitude.

## Revendications

1. Système comprenant
• un ressort (10) à pression de gaz ayant un boîtier (20) cylindrique, qui comporte une paroi (22), une partie (24) de fond et une partie (26) de couvercle ayant une ouverture (28) ainsi qu'un axe (1) longitudinal, et ayant un piston (30) pouvant coulisser dans le boîtier (20) le long de l'axe (1) longitudinal et ayant une face (32) externe, une face frontale et un élément (36) de réglage passant dans l'ouverture (28), une chambre (40) de compression de gaz étant formée entre le piston (30) et le boîtier (20) et le ressort (10) à pression de gaz comportant au moins un capteur (50) pour détecter une grandeur physique, qui est monté dans la partie (24) de fond, et un module (70) radio ayant une antenne (72), le module (70) radio et l'antenne (72) étant montés dans la partie (24) de fond,
**caractérisé par**
• un espace (100) de réception entourant la paroi du ressort (10) à pression de gaz et comportant une paroi intérieure,
• une fente d'une épaisseur d'au moins 0,5 mm étant formée entre la paroi externe de la paroi du ressort (10) à pression de gaz et la paroi interne de l'espace (100) de réception et la fente formant une antenne (110) secondaire.

2. Système suivant la revendication 1,
**caractérisé en ce que** l'antenne (72) est montée aussi près que possible de la paroi externe, notamment de la paroi latérale, de la partie (24) de fond, de préférence à une distance de moins de 3 mm, de manière particulièrement préférée à une distance de moins de 1,5 mm, par exemple à une distance d'environ 1 mm.

3. Système suivant l'une des revendications précédentes,
**caractérisé en ce que** l'antenne (72) est monopolaire, de préférence en serpentin, dans un plan, le plan étant disposé de préférence parallèlement à l'axe (1) longitudinal du ressort (10) à pression de gaz.

4. Système suivant l'une des revendications précédentes,
**caractérisé en ce que** l'antenne (72) est monopolaire, de préférence en serpentin, le long d'un axe (A) d'antenne, l'axe (A) d'antenne étant disposé de préférence parallèlement ou perpendiculairement à l'axe (1) longitudinal du ressort (10) à pression de gaz.

5. Système suivant la revendication 1 ou 2,
**caractérisé en ce que** l'antenne (72) est réalisée en antenne en forme de bobine ayant un axe longitudinal, l'axe longitudinal étant disposé notamment radialement par rapport à l'axe (1) longitudinal du ressort (10) à pression de gaz.

6. Système suivant l'une des revendications précédentes,
**caractérisé en ce que** la partie (24) de fond comporte un compartiment pour accumulateur, qui est fermé par un couvercle, l'antenne (72) étant montée dans ou sur le couvercle.

7. Système suivant la revendication 6,
**caractérisé en ce que** la partie (24) de fond comporte un porte-accumulateur ayant un fond (64) et une paroi (66) latérale, le fond (64) formant, de préférence le couvercle du compartiment pour accumulateur.

8. Système suivant la revendication 6 ou 7,
**caractérisé en ce que** le couvercle est monté dans la paroi latérale de la partie (24) de fond.

9. Système suivant l'une des revendications précédentes,
**caractérisé en ce que** l'antenne (72) est en liaison active avec l'antenne (110) secondaire, qui est réalisée en tant qu'antenne en fente étroite ou en fente.

10. Système suivant la revendication 9,
**caractérisé en ce que** la caractéristique de rayonnement de l'antenne (110) secondaire est modifiable par la position modifiable du piston (30) dans le ressort (10) à pression de gaz.

11. Système suivant l'une des revendications précédentes,
**caractérisé en ce que** le ressort (10) à pression de gaz comporte une électronique (52) d'exploitation, qui peut être montée entre le capteur (50) et le module (70) radio, et de préférence dans la partie (24) de fond.

12. Système suivant l'une des revendications précédentes,
**caractérisé en ce que** le capteur (50) est monté dans une ouverture de passage, disposée dans la paroi (24c) de la partie (24) de fond, tournée vers la chambre (40) de compression de gaz.

13. Système suivant l'une des revendications précédentes,
**caractérisé en ce que** la partie (24) de fond comporte un premier élément (24a) de partie de fond et un deuxième élément (24b) de partie de fond, le premier élément (24a) de partie de fond étant placé sur le deuxième élément (24b) de partie de fond et les deux éléments (24a, 24b) de partie de fond entourant, dans leur plus grande partie, un espace (25) creux et étant rendus étanches l'un par rapport à l'autre par une garniture (80) d'étanchéité.

14. Système suivant l'une des revendications précédentes,
**caractérisé en ce que** la partie (26) de couvercle du boîtier (20) est reliée d'un seul tenant avec la paroi (22) du boîtier (20).

15. Système suivant l'une des revendications précédentes,
**caractérisé en ce que** la fente a une épaisseur de 1 mm à 10 mm, de préférence de 1,5 mm à 6 mm, par exemple de 3 mm à 5 mm.

16. Système suivant l'une des revendications précédentes,
**caractérisé en ce que** la caractéristique de régulation de l'antenne (110) secondaire peut être modifiée par la position modifiable du piston (30) dans le ressort (10) à pression de gaz.

17. Procédé pour surveiller un état d'un ressort (10) à pression de gaz dans un système suivant l'une des revendications précédentes, comportant les étapes :
- on détermine l'amplitude en fonction du temps d'un signal radio reçu par le module (70) radio en un emplacement de réception et
- on compare l'amplitude à une courbe dans le temps escomptée de l'amplitude.
